Europäisches Patentamt

European Patent Office

Office européen des brevets

(19)

(11) **EP 0 798 540 B1**

(12) **EUROPÄISCHE PATENTSCHRIFT**

(45) Veröffentlichungstag und Bekanntmachung des Hinweises auf die Patenterteilung:
**22.08.2001   Patentblatt 2001/34**

(51) Int Cl.$^7$: **G01C 21/20**

(21) Anmeldenummer: **97250087.0**

(22) Anmeldetag: **20.03.1997**

(54) **Verfahren zur Referenzierung von ortsfesten Objekten**

Method to reference localized objects

Méthode pour référencer des objets localisés

(84) Benannte Vertragsstaaten:
**AT BE CH DE DK ES FI FR GB GR IT LI NL PT SE**

(30) Priorität: **25.03.1996   DE 19613013**

(43) Veröffentlichungstag der Anmeldung:
**01.10.1997   Patentblatt 1997/40**

(73) Patentinhaber: **MANNESMANN Aktiengesellschaft**
**40213 Düsseldorf (DE)**

(72) Erfinder: **Möhlenkamp, Klaus**
**40545 Düsseldorf (DE)**

(74) Vertreter: **Meissner, Peter E., Dipl.-Ing. et al**
**Meissner & Meissner,**
**Patentanwaltsbüro,**
**Hohenzollerndamm 89**
**14199 Berlin (DE)**

(56) Entgegenhaltungen:
| | |
|---|---|
| **EP-A- 0 242 050** | **DE-A- 3 744 533** |
| **DE-A- 4 028 214** | **DE-A- 4 340 147** |

**Beschreibung**

Die Erfindung betrifft ein Verfahren zur Referenzierung von ortsfesten Objekten auf der Erdoberfläche durch Zuordnung eines eindeutigen Codes.

Viele Dienstleistungen der Verkehrstelematik setzen eine Übermittlung von Informationen an ein Endgerät voraus. Ein solches Endgerät kann beispielsweise in einem Fahrzeug eingebaut oder als tragbares Gerät mobil ausgebildet sein. Die Informationen werden üblicherweise durch eine Servicezentrale oder ein System von Servicestationen bereitgestellt. Ein großer Teil der zu übertragenden Informationen bezieht sich dabei auf geografische Positionen. Typische Beispiele hierfür sind jede Art von Verkehrsinformation. Es ist daher erforderlich, daß die übermittelten Positionsangaben auch richtig zugeordnet werden, damit die Verkehrsinformation sinnvoll verwertet werden kann.

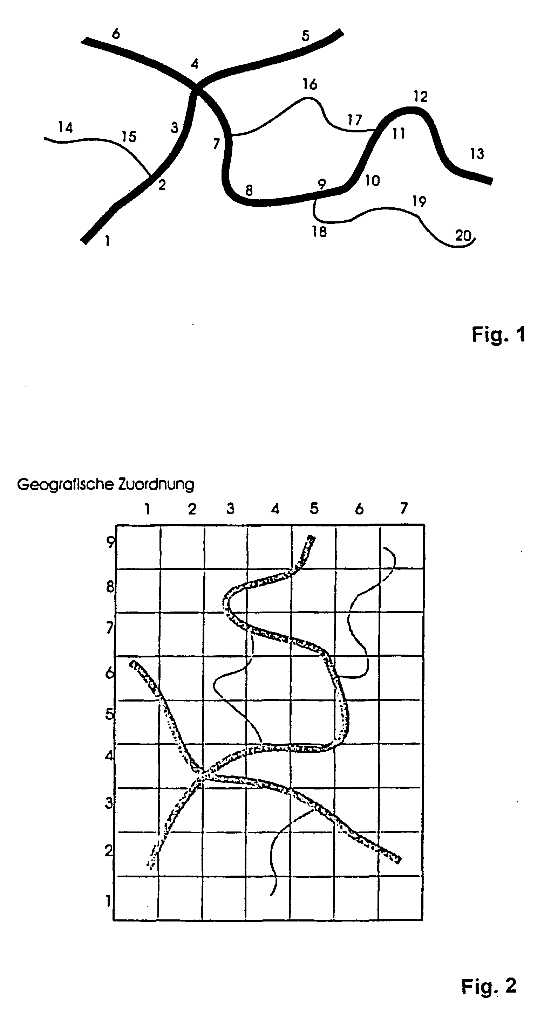

Für die eindeutige Zuordnung von Positionsdaten zu ortsfesten Objekten, die im folgenden auch als Referenzierung bezeichnet wird, sind verschiedene Lösungen bekannt und in technischen Systemen realisiert. Die Nachteile bestehender Systeme sollen an einem einschlägigen Beispiel erläutert werden. So werden im sogenannten ' RDS/ TMC-System (Radio Data System/Traffic Message Channel) Verkehrsinformationen an ein hierarchisch strukturiertes Modell (gemäß den Location Codes des ALERT-C-Protokolls) des Straßennetzes gekoppelt. Ein vordefiniertes Straßennetz wird hierzu in Straßenabschnitte zerlegt und durchnumeriert. Durch Definition von über- und untergeordneten Abschnitten wird eine Hierarchie-Struktur vorgegeben. So stellen beispielsweise die gesamte Strecke der Autobahn A 57 einen übergeordneten Abschnitt und etwa die Teilstücke der A 57 zwischen dem Kreuz Strümpp und der Abfahrt Krefeld-Oppum oder zwischen dem Kreuz Kaarst und der Abfahrt Neuss-Büttgen untergeordnete Abschnitte dar. Solche einzelnen Abschnitte können dann einfach durchnumeriert werden, wie dies in Fig. 1 für einen Kartenausschnitt schematisch dargestellt ist. Informationen werden dann jeweils mit Referenz auf die Nummer des vordefinierten Abschnitts übertragen. Ein solches Verfahren hat den Vorteil eines minimalen Datenvolumens für die Referenzierung bei der Informationsübertragung. Entscheidender Nachteil dieses und vieler anderer Verfahren ist es, daß die Informationsübermittlung abhängig vom Referenzmodell (in diesem Fall von der vorgegebenen Straßennetzstruktur) ist und dieses Referenzmodell auch im entsprechenden Endgerät beim Nutzer bekannt sein muß, damit die Informationen richtig verstanden werden können. Eine Verfeinerung des Modells ist in der Regel nicht möglich. Verschiedene geografische Modelle (z.B. Straßenkarten verschiedener Hersteller) können wegen unterschiedlicher Struktur nicht verwendet werden. Bei Änderung der Struktur wird die Datendarstellung zunehmend chaotisch, so daß Kompatibilitätsprobleme sowohl zwischen verschiedenen Endgeräten als auch zwischen verschiedenen Release-Ständen der Datenstruktur auftreten können.

Eine andere bekannte Lösung besteht darin, die Referenzierung nicht an verkehrstechnisch relevante Strukturen wie z.B. durchnumerierte Straßenabschnitte zu koppeln, sondern direkt geodätische Koordinaten zu verwenden, wie dies in Fig. 2 schematisch angedeutet ist. In der technischen Anwendung würde sich hier beispielsweise das WGS-84-Format (World Geodetic System) anbieten, wie es auch in den üblichen Satellitennavigationssystemen (GPS-Empfänger) verwendet wird. Ein Nachteil dieses Ansatzes besteht darin, daß bestimmte verkehrstelematische Anwendungen wie z.B. die Zielführung an großen, komplexen Kreuzungen eine sehr hohe Auflösung erfordern und das vorhandene und von verschiedenen Herstellern verwendete Datenmaterial nur jeweils in sich selbst konsistent ist. Bei der Referenzierung von verkehrstechnischen Objekten kommt es je nach verwendetem Datenmaterial zu mehr oder weniger großen Unterschieden und somit zu Kompatibilitätsproblemen bei der Inanspruchnahme verkehrstelematischer Dienste. Eine Kreuzung ist zwar sowohl auf der Karte des Herstellers A als auch des Herstellers B eine Kreuzung, jedoch ist es die Regel, daß dieser Kreuzung jeweils WGS-Koordinaten zugeordnet sind, die voneinander vielfach um bis zu 100 m abweichen. Die Verwendung solcher Koordinaten erlaubt also keine für alle Hersteller eindeutige Zuordnung.

Eine weitere Quelle von Mehrdeutigkeiten und Zuordnungsproblemen entsteht durch die Beschreibung größerer komplexer Objekte durch unterschiedlich strukturierte Unterobjekte (Referenzelemente). Ein Beispiel hierfür ist ein Autobahnkreuz mit einer Mehrzahl von Auf- und Abfahrten (Referenzelemente).

Die DE 37 44 533 A1 offenbart die Ermittlung der Schwerpunktkoordinaten von Häusern für eine digitale Karte. Die EP 0 242 050 A1 offenbart die Bestimmung zweidimensionaler Orts-Koordinaten für einen nicht- ortsfesten, bewegten Körper. Die DE 40 28 214 A1 offenbart die Bestimmung von karthesischen Koordinaten eines sich bewegenden Objektes aufgrund kontinuierlich generierter Standortdaten des sich bewegenden Objektes.

Aufgabe der Erfindung ist es, ein Verfahren zur Referenzierung von ortsfesten Objekten durch Zuordnung eines eindeutigen Codes dahingehend zu verbessern, daß die vorgenannten Kompatibilitätsprobleme mit möglichst geringem Aufwand überwunden werden. Ferner soll ein System zur Durchführung verkehrstelematischer Dienstleistungen und ein hierfür geeignetes Endgerät angegeben werden, das die genannten Kompatibilitätsprobleme überwindet.

Gelöst wird diese Aufgabe erfindungsgemäß durch ein Verfahren mit folgenden Schritten:

a) Es wird ein Gitternetz mit einer vorgegebenen Auflösung (Maschengröße) und einer vorgegebenen Lage bezüglich der Erdoberfläche definiert, wobei die Knotenpunkte des Gitternetzes durch eine erste reversible Rechenvorschrift in ein geografisches Koordinatensystem umrechenbar sind.

b) Die Objekte werden auf die Knotenpunkte des Gitternetzes eineindeutig abgebildet.

c) Den Knotenpunkten des Gitternetzes wird durch eine zweite reversible Rechenvorschrift jeweils eineindeutig ein Code zugeordnet.

d) Dem jeweiligen Objekt wird der in Schritt c) ermittelte Code des zugeordneten Knotenpunktes zugeordnet.

Unter einer reversiblen Rechenvorschrift wird in diesem Zusammenhang ein Algorithmus verstanden, bei dem die aus den Eingangsdaten erhaltenen Ergebnisse auch in umgekehrter Weise wieder in die Eingangsdaten zurückgerechnet werden können.

Es empfiehlt sich, das Gitternetz als orthogonales oder zumindest näherungsweise orthogonales Gitternetz zu definieren. In manchen Fällen ist es vorteilhaft, das Gitternetz als verzerrtes Gitternetz mit ungleichmäßiger Maschenweite festzulegen, wobei in Gebieten mit vielen Objekten je Flächeneinheit die Maschenweite enger ist als in Gebieten mit weniger Objekten je Flächeneinheit. Vorteilhafterweise wird die Ausdehnung des Gitternetzes auf ein geografisches Gebiet, z.B. auf ein Staatsgebiet oder auf einen Kontinent beschränkt. Dadurch läßt sich bei einer vorgegebenen Länge der einzelnen Codes (Zeichenanzahl) eine höhere Auflösung erzielen. Dieser Zusammenhang sollte bei der Festlegung der Größe des geografischen Gebietes berücksichtigt werden. Für verkehrstelematische Anwendungen hat es sich als zweckmäßig erwiesen, die Maschengröße des zu definierenden Gitternetzes im Bereich von 50 bis 500 m und besonders bevorzugt im Bereich einer Größenordnung von 100 m festzulegen. Als geografisches Koordinatensystem wird im Rahmen des erfindungsgemäßen Verfahrens vorzugsweise ein übernational gültiges Koordinatensystem wie etwa das geografische Koordinatensystem WGS-84 benutzt. Die Abbildung der Objekte auf die Knotenpunkte des definierten Gitternetzes erfolgt vorzugsweise derart, daß ein Objekt jeweils dem Knotenpunkt zugeordnet wird, der dem Objekt am nächsten liegt, und daß lediglich in dem Fall, daß dem Knotenpunkt bereits ein anderes Objekt zugeordnet wurde, ein anderer Knotenpunkt in der Nähe des Objektes für die Zuordnung gewählt wird.

Die Codes in Schritt c des erfindungsgemäßen Verfahrens können beispielsweise durch Durchnumerierung der einzelnen Knotenpunkte des Gitternetzes gebildet werden. Besonders empfehlenswert ist jedoch eine Vorgehensweise, bei der die Codes gemäß Schritt c jeweils als Ziffernfolge gebildet werden, die durch Aneinanderreihung der Koordinaten entsprechend einem als kartesisches Koordinatensystem ausgebildeten Gitternetzes entstehen.

Die erfindungsgemäße Referenzierung bietet sich nicht nur für reale, sondern auch für virtuelle Objekte an. So lassen sich nicht nur reale Objekte wie Kreuzungen, Straßenverzweigungen, Straßenbauwerke (z.B. Brücken oder Tunnel) und Städte (also Objekte mit erheblicher flächenhafter Ausdehnung) referenzieren, sondern auch virtuelle Objekte wie Länder, Staaten oder sonstige Verwaltungsbezirke. Diesen Objekten wird jeweils einfach ein entsprechender Punkt des Gitternetzes (z.B. der dem Flächenschwerpunkt nächstliegende Punkt) eindeutig zugeordnet. Die erhaltenen Codes der Objekte können für die weitere Verwendung z.B. in eine Referenztabelle eingespeist werden, in der den Codes Attribute zugeordnet werden. Als besonders wichtige Attribute sind etwa Namen und/oder Straßentyp und/oder Größe eines Gebiets und/oder ein Bezug zu anderen Objekten zu nennen.

Ein System zur Durchführung verkehrstelematischer Dienstleistungen mit einer Zentrale, die mit einer elektronischen Datenverarbeitungsanlage ausgestattet ist und Verkehrsinformationen sammelt, speichert und Nutzern über einen Kommunikationskanal zur Verfügung stellt, und mit einer Vielzahl von Endgeräten, die Verkehrsinformationen von der Zentrale empfangen können und für den jeweiligen Nutzer verfügbar machen, ist erfindungsgemäß dadurch gekennzeichnet, daß die Programmierung der elektronischen Datenverarbeitungsanlage derart eingerichtet ist, daß verkehrstechnisch bedeutsame Objekte mit den vorstehend genannten Verfahrensschritten a bis d referenziert werden.

Ein Endgerät für ein solches System ist erfindungsgemäß dadurch gekennzeichnet, daß das Endgerät eine elektronische Datenverarbeitungseinrichtung aufweist, die als Decodierer programmiert ist zur Entschlüsselung von Referenzierungen in Verkehrsinformationen, die mit dem erfindungsgemäßen Verfahren referenziert wurden. Zweckmäßigerweise ist in einem Speicher des Endgeräts eine Referenztabelle abgelegt, in der die Codes der Objekte enthalten und den Codes Attribute zugeordnet sind, insbesondere Namen und/oder Straßentyp und/oder Größe eines Gebiets und/oder ein Bezug zu anderen Objekten.

Die vorliegende Erfindung überwindet die eingangs genannten Kompatibilitätsprobleme. Dies wird nachfolgend am Beispiel von Verkehrsinformationen und deren Zuordnung zu einem Straßennetz näher erläutert. Das erfindungsgemäße Verfahren ist jedoch in seiner Anwendung nicht auf dieses Gebiet beschränkt, sondern läßt sich ganz allgemein bei der Zuordnung von Informationen zu einer geografischen Position verwenden.

Bei den folgenden Ausführungen wird auch auf die Darstellungen in den Figuren Bezug genommen. Es zeigen:

Fig.1        einen Landkartenausschnitt mit numerierten Streckenabschnitten,

Fig. 2       einen Landkartenausschnitt mit einem Koordinatengitternetz,

Fig. 3       die reale Lage von Objekten in einem Landkartenausschnitt und deren erfindungsgemäße Referenzierung,

Fig. 4 ein geografisches Gebiet für eine Gitternetzdefinition und

Fig. 5 ein Erdkugelmodell zur Erläuterung der Referenzierung eines Beispielpunktes.

Mit dem erfindungsgemäßen Verfahren wird angestrebt, die geografische Datenstruktur so einfach und universell wie nur irgend möglich zu gestalten. Das Lösungsprinzip greift dabei auf Merkmale zurück, wie sie aus den beiden eingangs in Verbindung mit den Fig. 1 und 2 erläuterten Verfahren nach dem Stand der Technik bekannt sind, und fügt sie in einer neuen, besonders vorteilhaften Weise zusammen.

Die Informationsdichte innerhalb einer Straßenkarte ist sehr unterschiedlich. So fallen für die Darstellung von Innenstadtstraßen oder eines Autobahnkreuzes auf sehr engem Raum sehr viele Informationen an. Umgekehrt stehen für derartige Objekte auch viele Informationen (z.B. über den Verkehrsfluß) zur Verfügung. Die Grundidee der Erfindung ist nun, daß man ähnlich wie in einschlägigen Methoden der Finite-Elemente-Rechnung eine Netzstruktur dem jeweils vorliegenden Problem anpaßt und an besonders interessanten Stellen zusätzliche Gitterpunkte definiert. Diese zusätzlichen Gitterpunkte werden aber nicht, wie in der Finite-Elemente-Rechnung anhand ihrer tatsächlichen Koordinaten definiert, sondern werden in ein fiktives Gitternetz umgerechnet. Hierzu wird ein einfaches Gitter auf der Erdoberfläche definiert. Zweckmäßigerweise wird dieses Gitter an ein gängiges Koordinatensystem angelehnt. Dieses muß aber weder quadratisch noch rechtwinklig sein. Ein Wesensmerkmal der Erfindung besteht nun darin, daß die Gitterkoordinaten als willkürlich definierte Koordinaten aufgefaßt werden.

Die Anwendung des erfindungsgemäßen Verfahrens ist nicht auf ein 2-dimensionales Gitter beschränkt, sondern ist auch vorteilhaft bei der Referenzierung in 3-dimensionalen Systemen. Im folgenden wird jedoch Bezug genommen auf die bevorzugte Anwendung im Straßenverkehr, so daß in der weiteren Beschreibung regelmäßig eine 2-dimensionale Projektion bezogen auf die Erdoberfläche zugrunde gelegt wird.

Das tatsächlich hinterlegte Gitternetz wird gemäß einem vorgegebenen Algorithmus reversibel umrechenbar auf dieses Koordinatennetz abgebildet, d.h. verzerrt. Ein Beispiel soll dies verdeutlichen:

Wird ein Abschnitt einer Autobahn aufgrund seiner realen geografischen Lage beispielsweise den Koordinatenpaaren (17; 34), (18; 34), (19; 35) usw. zugeordnet, so werden zusätzliche Merkmale dieses Abschnitts wie z.B. eine Auffahrt nach einem vorgegebenen Algorithmus (also willkürlich) auf freie nächste Koordinatenpaare verteilt, z. B. auf (18; 35). Da die Auffahrt nun nicht mehr auf ihrer realen Ortskoordinate liegt, ist dieses Gitter ein verzerrtes Ortsgitter. Durch Nutzung entsprechend gestalteter Algorithmen kann die damit verbundene Ungenauigkeit in der geografischen Zuordnung jedoch auf einige wenige Gitterabstände beschränkt werden. Der große Nutzen dieser Vorgehensweise liegt darin, daß man bei geschickter Wahl des Gitterabstands eine Vielzahl verkehrstelematischer Anwendungen realisieren kann, ohne die oben angegebenen Probleme in Kauf nehmen zu müssen. Für Anwendungen in der Verkehrstelematik hat sich eine Kantenlänge in einer Größenordnung von 100 m als besonders zweckmäßig erwiesen. Größere oder kleinere Gitterabstände sind selbstverständlich möglich, müssen aber vor dem Hintergrund der Übertragungseffizienz betrachtet werden, d.h. je kleiner die Kantenlänge ist, um so mehr Gitterpunkte gibt es und um so länger wird der Code zur Identifizierung eines Gitterpunktes. Bei Wahl eines Gitterabstandes von 100 m ist eine Zuordnung zur realen geografischen Position regelmäßig mit einer Genauigkeit von wenigen 100 m zu erwarten. Diese Genauigkeit reicht aus, um auch detaillierte Verkehrsinformationen noch angemessen an Straßenabschnitte zu knüpfen und andererseits die negativen Auswirkungen von Ungenauigkeiten oder Widersprüchlichkeiten auf der Ebene der digitalen Karte vollständig zu überwinden.

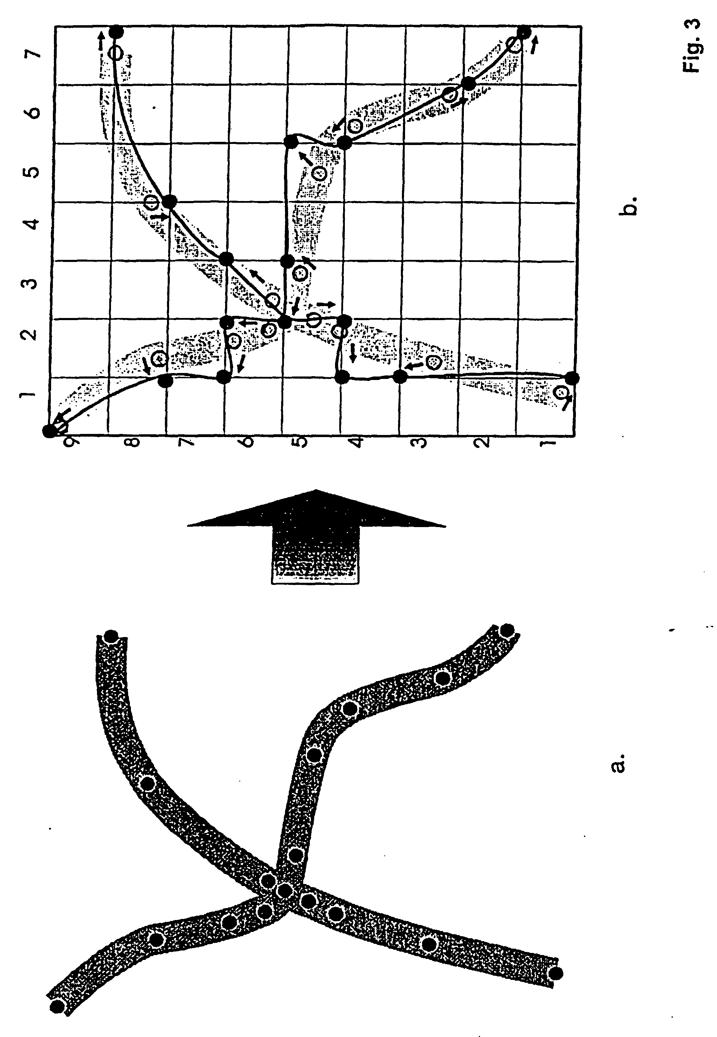

Die erfindungsgemäße Vorgehensweise ist in der Fig. 3 exemplarisch dargestellt: In der Teilfigur 3a ist ein Landkartenausschnitt mit einem Streckennetz abgebildet, das verschiedene verkehrstechnisch interessante Punkte, also ortsfeste Objekte wie etwa ein Autobahnkreuz mit den verschiedenen Abzweigungen, reguläre Autobahnauf- und -abfahrten, Parkplätze, Raststätten usw. aufweist. Die Objekte dieses Landkartenausschnitts werden nun, wie dies in der Teilfigur 3b exemplarisch dargestellt ist, den Gitterknoten eines vordefinierten Koordinatennetzes zugeordnet. Die reale Lage der Objekte ist in Fig. 3b durch (offene) Kreise angedeutet, während die durch den angewendeten Abbildungsalgorithmus vorgenommene Verzerrung durch entsprechende schwarze Punkte wiedergegeben ist. Der Algorithmus sieht vor, daß zunächst versucht wird, ein Objekt dem jeweils nächstliegenden Gitterknoten zuzuordnen. Ist dieser Gitterknoten aber bereits durch ein anderes Objekt belegt, wird ein anderer freier Gitterknoten in der Nähe willkürlich (aber eindeutig reversibel) bestimmt, wie dies durch die eingetragenen Pfeile angedeutet ist. Hierdurch ergibt sich zwar eine gewisse Verzerrung gegenüber der realen Lage, jedoch wird eine völlig eindeutige Zuordnung der Objekte zu den Gitterknoten gewährleistet.

Die vorliegende Erfindung hat speziell in der Verkehrstelematik entscheidende Vorteile:

- Die Flächendarstellung ist unabhängig von der Datenstruktur digitaler Karten. Jede digitale Karte bietet eine Ortungsfunktion, d.h. die Zuordnung einer allgemeinen XY-Koordinate zu bestimmten Karteninhalten. Die Verwendung ganz verschiedener Karten (verschiedene Hersteller, BITMAP- oder VECTOR-Darstellung) für verkehrstelematische Dienste ist durch die Erfindung problemlos möglich und erfordert höchstens eine einfache, automatisch durchführbare Umrechnung von verschiedenen XY-Darstellungen. Trotz der gewählten Vergröberung sind keine wesentlichen Kompatibilitätsprobleme zu erwarten.

- Die Informationsübertragung ist unabhängig von vorgegebenen Straßenkarten. Somit können auf einfachste Weise auch flächenbezogene Informationen wie z.B. Wetterdaten referenziert und im Rahmen der jeweiligen Anwendung übertragen und verarbeitet werden.

- Wenn die Gitterkoordinaten zum Zwecke der Auswertung oder Darstellung im Endgerät ohnehin vergröbert werden, weil beispielsweise eine Ortsauflösung von 1 km als völlig ausreichend erachtet wird, so entspricht die Gitterkoordinate bereits der geografischen Position. Damit kann bereits eine Vielzahl von interessanten verkehrstelematischen Diensten direkt und ohne Straßenkarte oder Koodierungstabelle (z.B. RDS/TMC) realisiert werden. Beispiele hierfür sind Verkehrshinweise ("Stau auf der A3 in 5 km Entfernung vor Ihnen") oder einfache Zielführungsdienste (Homing).

- Die Kompatibilität von Geräten verschiedener Hersteller ist gewährleistet.

- Der Datenaustausch auf internationaler Ebene ist einfach zu realisieren.

- Die Übertragung in XY-Format ermöglicht auf einfachste Weise die Realisierung von grafischen Anzeigen in Endgeräten.

- Eine Verfeinerung des Gitternetzes ist bei Bedarf grundsätzlich möglich. In einem solchen Fall kann z.B. die interne feinere Unterteilung des Gitters als zusätzliche Information an das jeweilige Endgerät übertragen werden. Denkbar ist aber auch die Übersendung von einigen Kennungsbits zur Definition des Maßstabs.

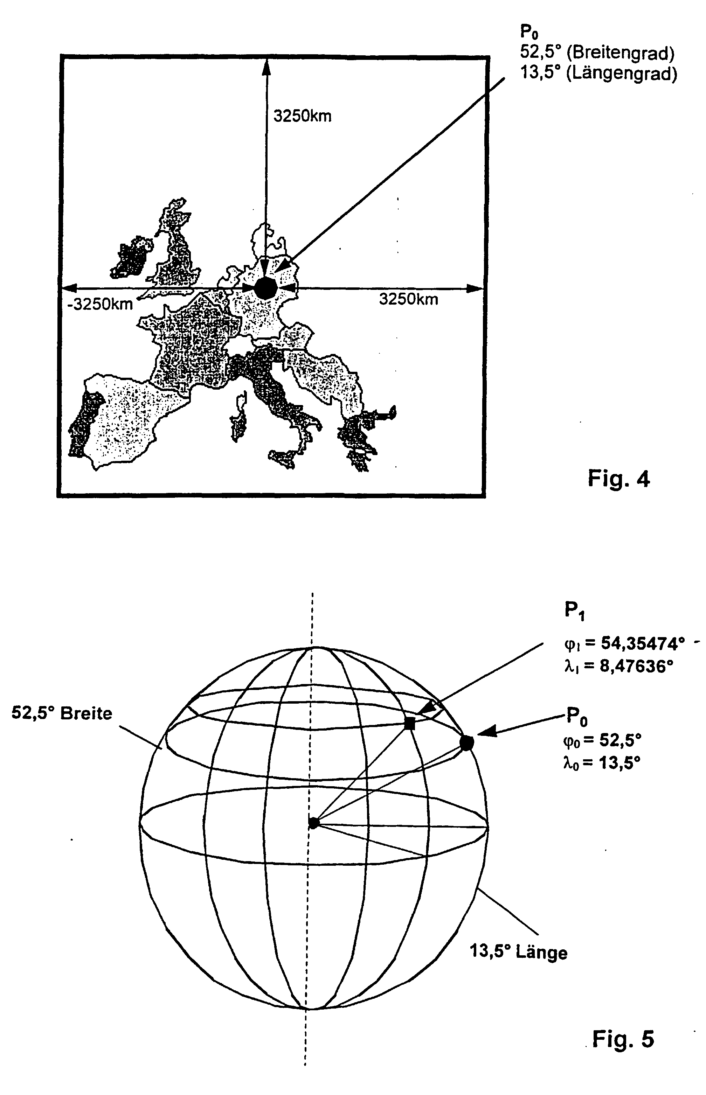

Das nachfolgende Ausführungsbeispiel verdeutlicht die erfindungsgemäße Referenzierung von Objekten durch Zuordnung eines eindeutigen Codes. Dieses Beispiel bezieht sich auf das geografische Gebiet Europa, für das eine einheitliche Codierung (Geocodierung) gewährleistet werden soll. Wie die Fig. 4 zeigt, ist hierfür ein quadratisches Gebiet mit einer Kantenlänge von 2 x 3250 km = 6500 km vorgegeben, dessen Mittelpunkt auf einen gewählten Bezugspunkt $P_o$ mit den folgenden geodätischen Gradangaben im WGS-84-Koordinatensystem gelegt wurde:

Breitengrad 52,5 °
Längengrad 13,5 °

Um Punkte in diesem 6500 x 6500 km$^2$ großen Gebiet angemessen codieren zu können, sollen für die Codierung 2 x 16 Bit (65536 x 65536 mögliche Gitterpunkte) verwendet werden. Bei dieser Codelänge kann also ein quadratisches Gitternetz mit einer Maschengröße (Kantenlänge) von 100 m vorgegeben werden. Zur eindeutigen reversiblen Umrechnung geografischer Koordinaten (WGS-84) in den erfindungsgemäßen Geocode des vorliegenden Beispiels wird zunächst der Bezugspunkt $P_o$ (Breite 52,5 °, Länge 13,5 °) als Nullpunkt eines kartesischen Koordinatensystems für das gewählte Gebiet definiert. Die Positionen von einzelnen Objekten werden mit ihren jeweiligen Abständen in west-östlicher (x-Richtung) und in süd-nördlicher Richtung (y-Richtung) von diesem Nullpunkt $P_o$ festgelegt. Abstände in westlicher und südlicher Richtung von diesem Nullpunkt $P_o$ werden dabei mit negativen Vorzeichen versehen. In der praktischen Ausführung können diese Abstände in 16 Bit im zweier Komplement codiert werden. Die Formeln zur reversiblen Umrechnung der geografischen WGS-84-Koordinaten eines Punktes $P_1$ lauten:

$$x_1 = (\lambda_1 - \lambda_0) \frac{400300}{360°} \cos \varphi_1$$

$$y_1 = (\varphi_1 - \varphi_0) \frac{400300}{360°}$$

Darin bedeuten:

$\lambda_o$ = Längengrad des Null-Punktes
$\lambda_1$ = Längengrad des zu referenzierenden Punktes
$\varphi_o$ = Breitengrad des Null-Punktes
$\varphi_1$ = Breitengrad des zu referenzierenden Punktes

Der Zahlenwert 400300 in der Formel repräsentiert den in Gitterabstandseinheiten (100 m) gemessenen Äquatorumfang der Erdkugel von ca. 40030 km.

Mit diesen Beziehungen ergibt sich für den in Fig. 5 zusätzlich zu dem Null-Punkt $P_o$ ($\varphi_o$ = 52,5 °; $\lambda_o$ = 13,5 °) eingezeichneten Punkt P1 mit den WGS-84-Koordinaten $\varphi_1$ = 54,35474 ° und $\lambda_1$ = 8,47636 ° folgender Geocode:

$$\text{Ost-West-Abstand } x_1 = (8,47366 \,° \, 13,5 \,°) \frac{400300}{360°} \cos (54,35474 \,°)$$

$$x_1 = -3255$$

$$\text{Nord-Süd-Abstand } y_1 = (54,35474 \,° - 52,5°) \frac{400300}{360°}$$

$$y_1 = 2062$$

Somit erhält man für den Punkt P1 die Geocodierung (20062; - 3255). Diese Information kann in je 16 Bit (zweier Komplement) verschlüsselt werden. Beide 16 Bit-Zeilen werden z.B. in der Reihenfolge x und y einfach aneinandergehängt zu einer 32 Bit-Zeichenfolge, die in eine Zahl umgewandelt wird und den Geocode darstellt.

Der so erhaltene Geocode des Punktes P1 kann problemlos eindeutig wieder in die geografischen Koordinaten zurückgerechnet werden. Hierzu werden folgende Formeln benutzt:

$$\varphi_1 = y_1 \frac{360°}{40300} + \varphi_0$$

$$\lambda_1 = x_1 \frac{360°}{40300\cos\varphi 1} + \lambda_0$$

Dabei wird zunächst der Breitengrad $\varphi_1$ ermittelt und anschließend unter Verwendung des Wertes $\varphi_1$ der Längengrad $\lambda_1$. Bei der Errechnung des $\cos \lambda_1$ ist eine Beschränkung auf neun signifikante Nachkommastellen (32 Bit) für eine ausreichende Genauigkeit zulässig.

**Patentansprüche**

1. Verfahren zur Referenzierung von ortsfesten Objekten auf der Erdoberfläche durch Zuordnung eines eindeutigen Codes, gekennzeichnet durch folgende Schritte:

   a) Es wird ein Gitternetz mit einer vorgegebenen Auflösung (Maschengröße) und einer vorgegebenen Lage bezüglich der Erdoberfläche definiert, wobei die Knotenpunkte des Gitternetzes durch eine erste reversible Rechenvorschrift in ein geografisches Koordinatensystem umrechenbar sind.
   b) Die Objekte werden auf die Knotenpunkte des Gitternetzes eineindeutig abgebildet.
   c) Den Knotenpunkten des Gitternetzes wird durch eine zweite reversible Rechenvorschrift jeweils eineindeutig ein Code zugeordnet.
   d) Dem jeweiligen Objekt wird der in Schritt c) ermittelte Code des zugeordneten Knotenpunktes zugeordnet.

2. Verfahren nach Anspruch 1,
   dadurch gekennzeichnet,
   daß das Gitternetz als näherungsweise orthogonales Gitternetz definiert wird.

3. Verfahren Anspruch 1,
   dadurch gekennzeichnet,
   daß das Gitternetz als verzerrtes Gitternetz mit ungleichmäßiger Maschenweite definiert wird, wobei in Gebieten mit vielen Objekten je Flächeneinheit die Maschenweite enger ist als in Gebieten mit weniger Objekten je Flächeneinheit.

4. Verfahren nach einem der Ansprüche 1 bis 3,
   dadurch gekennzeichnet,

daß die Ausdehnung des Gitternetzes auf ein geografisches Gebiet beschränkt wird.

5. Verfahren nach Anspruch 4,
dadurch gekennzeichnet,
daß die Größe des geografischen Gebiets und die Auflösung des Gitternetzes in Abhängigkeit von der vorgegebenen Länge des Codes (Zeichenanzahl) festgelegt werden.

6. Verfahren nach einem der Ansprüche 1 bis 5,
dadurch gekennzeichnet,
daß die Maschengröße für verkehrstelematische Anwendungen im Bereich von 50 bis 500 m festgelegt wird.

7. Verfahren nach Anspruch 6,
dadurch gekennzeichnet,
daß die Maschengröße in einer Größenordnung von 100 m liegt.

8. Verfahren nach einem der Ansprüche 1 bis 7,
dadurch gekennzeichnet,
daß als geografisches Koordinatensystem ein übernational gültiges Koordinatensystem benutzt wird.

9. Verfahren nach Anspruch 8,
dadurch gekennzeichnet,
daß als geografisches Koordinatensystem das System WGS-84 benutzt wird.

10. Verfahren nach einem der Ansprüche 1 bis 9,
dadurch gekennzeichnet,
daß die Abbildung der Objekte auf die Knotenpunkte des Gitternetzes in der Weise erfolgt, daß ein Objekt jeweils dem Knotenpunkt zugeordnet wird, der dem Objekt am nächsten liegt und lediglich in dem Fall, daß dem Knotenpunkt bereits ein anderes Objekt zugeordnet wurde, ein anderer Knotenpunkt in der Nähe des Objektes für die Zuordnung gewählt wird.

11. Verfahren nach einem der Ansprüche 1 bis 10,
dadurch gekennzeichnet,
daß die Codes in Schritt c) durch Durchnumerierung der einzelnen Knotenpunkte des Gitternetzes gebildet werden.

12. Verfahren nach einem der Ansprüche 1 bis 10,
dadurch gekennzeichnet,
daß die Codes in Schritt c) jeweils als Ziffernfolge gebildet werden, die durch Aneinanderreihung der Koordinaten entsprechend einem als kartesisches Koordinatensystem ausgebildeten Gitternetzes entstehen.

13. Verfahren nach einem der Ansprüche 1 bis 12,
dadurch gekennzeichnet,
daß neben realen auch virtuelle Objekte referenziert werden.

14. Verfahren nach Anspruch 13,
dadurch gekennzeichnet,
daß als Objekte Kreuzungen, Straßenverzweigungen, Straßenbauwerke, Städte, Länder, Staaten und sonstige Verwaltungsbezirke referenziert werden.

15. Verfahren nach einem der Ansprüche 1 bis 14,
dadurch gekennzeichnet,
daß die Codes der Objekte jeweils in eine Referenztabelle eingespeist werden, in der den Codes Attribute zugeordnet werden.

16. Verfahren nach Anspruch 15,
dadurch gekennzeichnet,
daß als Attribut ein Name und/oder ein Straßentyp und/oder die Größe eines Gebiets und/oder ein Bezug zu anderen Objekten zugeordnet wird.

**17.** System zur Durchführung verkehrstelematischer Dienstleistungen mit einer Zentrale, die mit einer elektronischen Datenverarbeitungsanlage ausgestattet ist und Verkehrsinformationen sammelt, speichert und Nutzern über einen Kommunikationskanal zur Verfügung stellt und mit einer Vielzahl von Endgeräten, die Verkehrsinformationen von der Zentrale empfangen können und für den jeweiligen Nutzer verfügbar machen,
dadurch gekennzeichnet,
daß die Programmierung der elektronischen Datenverarbeitungsanlage derart eingerichtet ist, daß verkehrstechnisch bedeutsame Objekte in den Verkehrsinformationen nach dem Verfahren gemäß Anspruch 1 referenziert werden.

**18.** Endgerät für ein System nach Anspruch 17,
dadurch gekennzeichnet,
daß das Endgerät eine elektronische Datenverarbeitungseinrichtung aufweist, die als Decodierer programmiert ist zur Entschlüsselung von Referenzierungen in Verkehrsinformationen, die mit den Verfahren gemäß Anspruch 1 referenziert werden.

**19.** Endgerät nach Anspruch 18,
dadurch gekennzeichnet,
daß in einem Speicher des Endgeräts eine nach dem Verfahren gemäß Anspruch 15 oder 16 erzeugte Referenztabelle abgelegt ist.


**Claims**

**1.** Method for referencing stationary objects on the earth's surface through the association of a unique code, characterised by the following steps:

a) A grid system with a predetermined resolution (mesh size) and a predetermined position in relation to the earth's surface is defined, wherein the nodal points of the grid system can be converted by means of a first reversible computing rule into a geographic coordinate system.
b) The objects are unambiguously mapped onto the nodal points of the grid system.
c) A code is in each case unambiguously associated with the nodal points of the grid system by means of a second reversible computing rule.
d) The code of the associated nodal point which is established in step c) is associated with the respective object.

**2.** Method according to Claim 1,
characterised in that the grid system is defined as an approximately orthogonal grid system.

**3.** Method according to Claim 1,
characterised in that the grid system is defined as a distorted grid system with a non-uniform mesh width, wherein the mesh width is narrower in zones with many objects per unit area than in zones with a few objects per unit area.

**4.** Method according to any one of Claims 1 to 3,
characterised in that the extent of the grid system is restricted to one geographic zone.

**5.** Method according to Claim 4,
characterised in that the size of the geographic zone and the resolution of the grid system are fixed in accordance with the predetermined length of the code (number of characters).

**6.** Method according to any one of Claims 1 to 5,
characterised in that the mesh size for traffic telematics applications is fixed in the range form 50 to 500 m.

**7.** Method according to Claim 6,
characterised in that the mesh size lies in an order of magnitude of 100 m.

**8.** Method according to any one of Claims 1 to 7,
characterised in that a coordinate system which is supernationally valid is used as geographic coordinate system.

**9.** Method according to Claim 8,

characterised in that the WGS-84 system is used as geographic coordinate system.

**10.** Method according to any one of Claims 1 to 9,
characterised in that the objects are mapped onto the nodal points of the grid system such that one object is in each case associated with the nodal point which lies nearest to the object, and only in the case in which another object has already been associated with the nodal point is another nodal point in the vicinity of the object selected for the association.

**11.** Method according to any one of Claims 1 to 10,
characterised in that the code is formed in step c) by consecutively numbering the individual nodal points of the grid system.

**12.** Method according to any one of Claims 1 to 10,
characterised in that the codes are in each case formed in step c) as a sequence of digits which is produced by combining the coordinates according to a grid system formed as a Cartesian coordinate system.

**13.** Method according to any one of Claims 1 to 12,
characterised in that virtual objects are referenced in addition to real ones.

**14.** Method according to Claim 13,
characterised in that crossroads, road junctions, road structures, towns, Länder, states and other administrative districts are referenced as objects.

**15.** Method according to any one of Claims 1 to 14,
characterised in that the codes of the objects are in each case fed into a reference table, in which attributes are associated with the codes.

**16.** Method according to Claim 15,
characterised in that a name and/or a road type and/or the size of a zone and/or a reference to other objects is/are associated as attribute.

**17.** System for performing traffic telematics services with a control centre which is provided with an electronic data processing system and collects and stores traffic information and makes this available to users via a communication channel, and with a plurality of terminals which can receive traffic information from the control centre and make this available to the respective user,
characterised in that the programming of the electronic data processing system is adapted such that objects which are significant in traffic terms are referenced in the traffic information according to the method of Claim 1.

**18.** Terminal for a system according to Claim 17,
characterised in that the terminal comprises an electronic data processing system which is programmed as a decoder for decoding references in traffic information which is referenced using the method according to Claim 1.

**19.** Terminal for a system according to Claim 18,
characterised in that a reference table produced according to the method of Claim 15 or 16 is stored in a memory of the terminal.

**Revendications**

**1.** Procédé pour référencer des objets fixes sur la surface terrestre par association d'un code univoque,
caractérisé par les étapes suivantes :

a) il est défini un réseau de quadrillage ayant une résolution prédéfinie (taille de maille) et une position prédéfinie relativement à la surface terrestre, les points nodaux du réseau de quadrillage pouvant être convertis en un système de coordonnées géographique par une première prescription de calcul réversible,
b) les objets sont représentés de façon biunivoque sur les points nodaux du réseau de quadrillage,
c) aux points nodaux du réseau de quadrillage, il est associé, à chaque fois de façon biunivoque, un code par une seconde prescription de calcul réversible,

d) à l'objet respectif, il est associé le code, déterminé dans l'étape c), du point nodal associé.

2. Procédé selon la revendication 1,
caractérisé en ce que le réseau de quadrillage est défini comme réseau de quadrillage orthogonal par approximation.

3. Procédé selon la revendication 1,
caractérisé en ce que le réseau de quadrillage est défini comme réseau de quadrillage déformé ayant une largeur de maille non uniforme, la largeur de maille étant plus étroite dans des régions ayant de nombreux objets par unité de surface que dans des régions ayant moins d'objets par unité de surface.

4. Procédé selon une des revendications 1 à 3,
caractérisé en ce que l'extension du réseau de quadrillage est limitée à une région géographique.

5. Procédé selon la revendication 4,
caractérisé en ce que la taille de la région géographique et la résolution du réseau de quadrillage sont déterminées de façon dépendant de la longueur prédéfinie du code (nombre de caractères).

6. Procédé selon une des revendications 1 à 5,
caractérisé en ce que la taille de maille pour des utilisations télématiques de trafic est déterminée dans la plage de 50 à 500 m.

7. Procédé selon la revendication 6,
caractérisé en ce que la taille de maille est de l'ordre de grandeur de 100 m.

8. Procédé selon une des revendications 1 à 7,
caractérisé en ce que, comme système de coordonnées géographique, il est utilisé un système de coordonnées en vigueur de façon internationale.

9. Procédé selon la revendication 8,
caractérisé en ce que, comme système de coordonnées géographique, il est utilisé le système WGS-84.

10. Procédé selon une des revendications 1 à 9,
caractérisé en ce que la représentation des objets sur les points nodaux du réseau de quadrillage est effectuée de façon qu'un objet est associé, à chaque fois, au point nodal qui est le plus proche de l'objet et, uniquement dans le cas où, au point nodal, un autre objet a déjà été associé, un autre point nodal est choisi à proximité de l'objet pour l'association.

11. Procédé selon une des revendications 1 à 10,
caractérisé en ce que les codes dans l'étape c) sont formés par numérotation des points nodaux individuels du réseau de quadrillage.

12. Procédé selon une des revendications 1 à 10,
caractérisé en ce que les codes dans l'étape c) sont formés, à chaque fois, comme suites de chiffres, qui sont créées par mise à la file des coordonnées de façon correspondant à un réseau de quadrillage réalisé comme système de coordonnées cartésien.

13. Procédé selon une des revendications 1 à 12,
caractérisé en ce que, à côté d'objets réels, également des objets virtuels sont référencés.

14. Procédé selon la revendication 13,
caractérisé en ce que, comme objets, sont référencés des carrefours, embranchements routiers, constructions routières, villes, états, pays, et districts administratifs quelconques.

15. Procédé selon une des revendications 1 à 14,
caractérisé en ce que les codes des objets sont mémorisés, à chaque fois, dans une table de référence, dans laquelle des attributs sont associés aux codes.

**16.** Procédé selon la revendication 15,
caractérisé en ce que, comme attributs, un nom et/ou un type de voie routière et/ou la taille d'une région et/ou une relation par rapport à d'autres objets sont employés.

**17.** Système pour effectuer des services télématiques de trafic, comportant une centrale, qui est équipé d'une installation électronique de traitement de données et collecte des informations de trafic, les mémorise et les met à disposition d'utilisateurs par l'intermédiaire d'un canal de communication, et une pluralité de terminaux, qui peuvent recevoir des informations de trafic de la centrale et les rendre disponibles pour l'utilisateur respectif,
caractérisé en ce que la programmation de l'installation électronique de traitement de données est adaptée de sorte que des objets significatifs au niveau du trafic, dans les informations de trafic, sont référencés suivant le procédé selon la revendication 1.

**18.** Terminal pour un système selon la revendication 17,
caractérisé en ce que le terminal présente un dispositif électronique de traitement de données, qui est programmé comme décodeur pour décoder des références dans des informations de trafic, qui sont référencées par le procédé selon la revendication 1.

**19.** Terminal selon la revendication 18,
caractérisé en ce qu'une table de référence, engendrée suivant le procédé selon la revendication 15 ou 16, est stockée dans une mémoire du terminal.

**Fig. 1**

Geografische Zuordnung

**Fig. 2**

EP 0 798 540 B1

Fig. 3

b.

a.

13

P0
52,5° (Breitengrad)
13,5° (Längengrad)

3250km

-3250km

3250km

**Fig. 4**

P1
$\varphi_l = 54,35474°$
$\lambda_l = 8,47636°$

52,5° Breite

P0
$\varphi_0 = 52,5°$
$\lambda_0 = 13,5°$

13,5° Länge

**Fig. 5**